# EUROPEAN PATENT APPLICATION

(11) **EP 0 703 458 A1**
(43) Date of publication of application: **27.03.1996**
(21) Application number: 95113901.3
(22) Date of filing: 05.09.1995
(51) Int. Cl.: G01P 5/07, G01P 3/50

(54) **Anemometer-driven tachometer for skiers**

(30) Priority: 09.09.1994 IT MI941855
(71) Applicant: Bargiggia, Giansiro, I-27019 Villanterio (PV) (IT)
(72) Inventor: Bargiggia, Giansiro, I-27019 Villanterio (PV) (IT)
(74) Representative: La Ciura, Salvatore

(57) **Abstract**

Anemometer-driven tachometer for skiers consisting of a permanent magnet fixed to a propeller rotating around a shaft, the said propeller being enclosed in a container with air entry and exit orifices, and a magnetic detector connected to a computer designed to analyse the output signal from the magnetic detector, which supplies signals corresponding to the skier's conditions of travel, including the travel signal, and to an analog or digital display designed to indicate the output signal of the computer.

Fastening means are provided, which allow the instrument to be fixed to the skier and rapidly released.

## Description

The invention relates to an instrument from which skiers can obtain the speed travelled and other data relating to the ski run.

Anemometers are known, which are generally of the rotating-cup or propeller type. In both cases, the number of revolutions is proportional to wind speed, and is converted into m/sec or kph. The most recently used cup anemometers contain a magnetic detector which evaluates the number of revolutions of the rotating shaft. A small magnet is usually fixed to the rotating shaft and a magnetic detector is fitted near the shaft. As the shaft rotates, the electrical circuit is made when the magnet and transducer are closest together, allowing the electrical impulse to pass. This system accurately measures the number of shaft revolutions and, if suitably calibrated, the wind speed in metres/second, kilometres/ hour, etc.

### Summary of the invention

This invention is designed to provide an anemometer-driven tachometer for skiers.

To achieve this purpose, a rotating-blade propeller is enclosed in a container with orifices which allow the entry and exit of the airflow. A magnet is fixed to the propeller. When the propeller is rotated by the airflow generated by the skier's movement, the magnet activates a magnetic detector (which might be the bulb type) connected to a computer with display (e.g. the type used as a cyclometer). The computer analyses the signals received from the magnetic detector to obtain data relating to the speed of travel and other travel conditions; these data are shown on the display. The instrument is connected to a belt which enables it to be attached to the skier's body.

### Example of implementation

The figures show an example of implementation of the anemometer-driven tachometer for skiers.
- Fig. 1) The anemometer-driven tachometer to which the invention relates, shown in axial section.
- Fig.2) Ditto shown in front view.
- Fig.3) Partial side view of a skier showing a possible location for the anemometer-driven tachometer.
- Fig.4) Block diagram of the anemometer-driven tachometer.

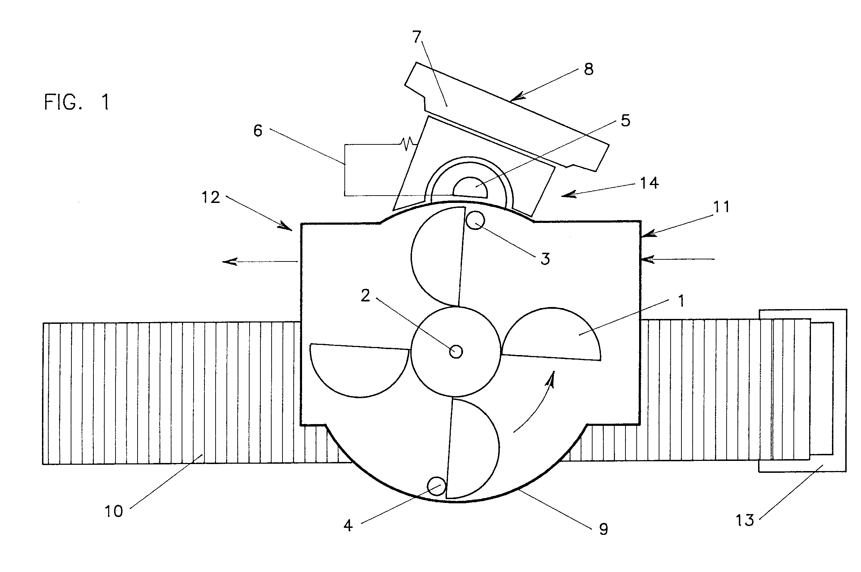

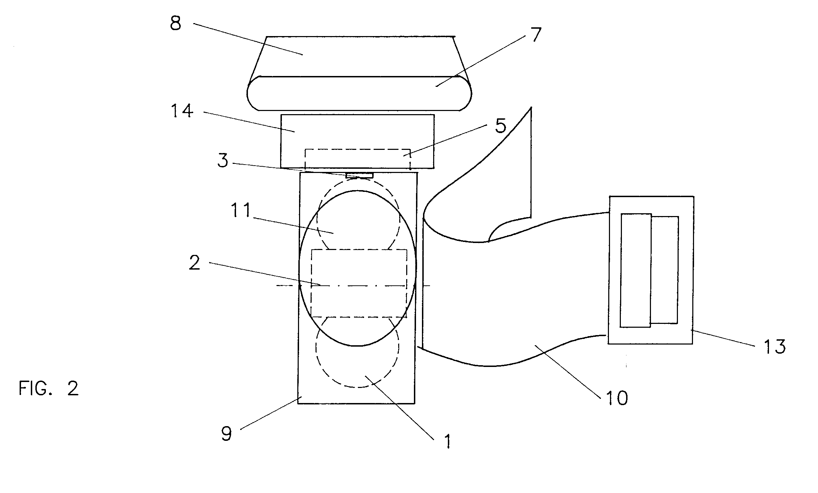

Figs. 1 and 2 show an anemometer-driven tachometer in accordance with this invention. A container (9) presents an orifice (11) on the front side and an orifice (12) on the rear side. Container (9) should preferably be made of plastic or rubber material, but could also be made of another suitable material. Container (9) in the implementation example has a basically cylindrical shape, but could have any shape. Its diameter could obviously be varied. One side of container (9) is preferably fixed in such a way that it can be removed rapidly if necessary (e.g. for internal cleaning).

The shape and size of the airflow entry and exit orifices (11 and 12) can vary, depending on the sensitivity and type of measurement required. Preferably, front orifice (11) and rear orifice (12) in the implementation example are located in the container itself. These orifices allow the airflow to enter and exit from the container.

Inside container (9) there is a bladed propeller (1) which rotates around a central shaft (2), the axis of which corresponds to the central axis of container (9) and is perpendicular to the airflow in the implementation example. The rotation movement of the propeller in the implementation example is parallel to the airflow direction. However, in other circumstances propeller shaft (2) could be parallel to the airflow, in which case the movement of the propeller would be perpendicular to the airflow. In the implementation example the propeller has four blades, but their number could vary from 2 to 12 or more. According to a preferred type of implementation the shape of the blades will be basically hemispherical, although they could have another suitable shape.

At the end of one of the blades there is a small permanent magnet (3) (such as a bar magnet). A small weight (4) could be placed on the end of the blade diametrically opposite the one on which the permanent magnet is fitted, to balance the weight of the magnet. Permanent magnet (3) could advantageously be located in another sector of propeller (1) or even on an appendix of the said propeller. If appropriate, more than one permanent magnet could be used.

A magnetic detector (5), connected by electric wiring (6) to a computer (7) and a digital (8) or analog display, is fitted on the outside of cylindrical container (9) close to the wall and the blades. The computer with display could, for example, be the type used as a cyclometer.

Magnetic detector (5) can also be advantageously located inside container (9) in a protected position. When magnet (3) is closest to magnetic detector (5), the distance between them should not exceed 15 mm. In the implementation example, computer (7) is fitted to the top of container (9) on a support (14), but it could also be advantageously located on another side of container (9), or even at a distance from container (9).

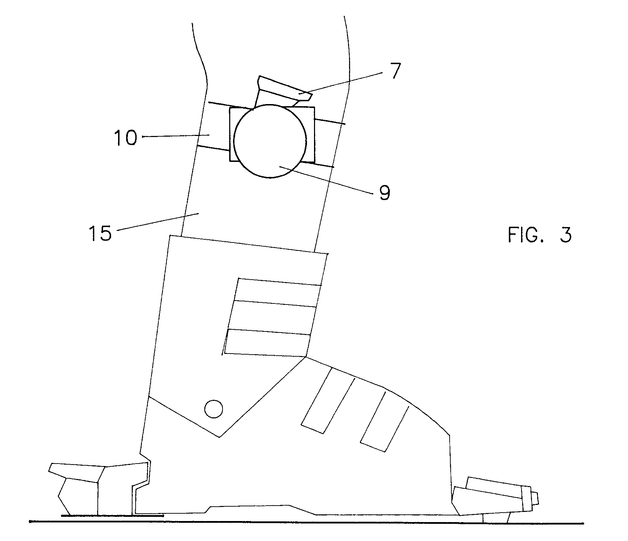

In the implementation example, the anemometer-driven tachometer is connected to a belt (10) with buckle (13) which enables it to be fixed to the skier (e.g. to the skier's leg (15): see fig. 3).

Belt (10) can be elastic or rigid, and other fastening systems (such as velcro) could be used as an alternative to buckle (13). As an alternative to belt (10), the fixing system could be a clamp, hook or other equally useful system. In some circumstances the tachometer could even be incorporated in the moving body (e.g. the ski boot).

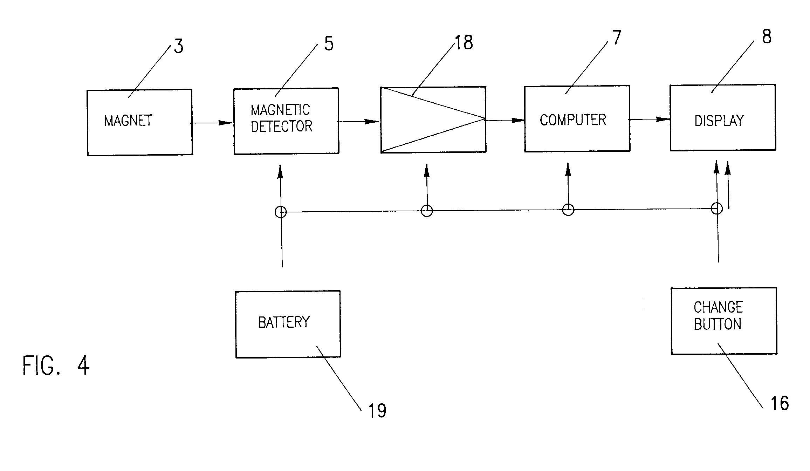

In Fig. 4, which shows the electrical structure of the anemometer-driven tachometer, magnet (3) is constituted, for example, by a magnetic bar, the ends of which define the magnetic poles. Magnetic detector (5) (which might be the bulb or cannula type) is fitted at a point where it intermittently encounters the magnet in response to the rotation of propeller (1). Magnetic detector (5) is connected to an amplifier 18 which is connected to a computer 7 which transmits the impulse to a display (8) constituted, for example, by liquid crystals. The data shown on display (8) can be changed with a change button (16). A battery (19) supplies energy to all the parts.

In the anemometer-driven tachometer with the said structure, when propeller (1) rotates in response to the airflow generated by the skier's movement, magnet (3) passes close to magnetic detector (5) at a frequency corresponding to the airflow speed; magnetic detector (5) therefore supplies an impulse on every passage. When suitably calibrated, computer (7) calculates or detects an instantaneous speed proportional to the frequency of the said impulses; computer (7) also allows calculation or detection of the distance travelled using the said signals, together with the time since the beginning of the run, the average speed, maximum speed and other possible data; these data are shown on display (8).

The electrical circuit is preferably configured in such a way that the instantaneous speed is continuously shown on display (8), but all of the above-mentioned data can be shown on display (8) if change button (16) is operated.

This invention is the first to use the anemometry technique to construct a tachometer from which skiers can obtain speed information and other data relating to the run.

The invention in question offers the advantage that rotating propeller (1) is enclosed in a container (9) with predetermined orifices (11 and 12) for the entry and exit of the airflow; propeller (1) therefore only rotates when the airflow is parallel or almost parallel to the axial direction of the orifices. As well as its aerodynamic function, container (9) also protects the propeller (1) and the entire instrument against shocks or other damage.

The invention also presents the advantage of having a belt (10) or other support which enables the instrument to be attached to the skier or any moving body, and to be attached and released rapidly. It is therefore evident that the invention in question provides information about the instantaneous, top and average speeds and, if computer (7) is suitably calibrated, about the distance travelled by skiers and the elapsed time; it could possibly also be used for other purposes in which conventional tachometers cannot be employed.

The invention in question has been described and represented merely by way of example and not of limitation, in order to demonstrate its basic characteristics; it can therefore be subject to numerous variations, depending on industrial, commercial and other requirements, and include other systems and equipment, without falling outside the scope of the present invention.

The patent application should therefore be deemed to include every equivalent application of the concepts and every equivalent product implemented and/or operating in accordance with one or more of the characteristics specified in the claims set out below.

## Claims

1. Anemometer-driven tachometer for skiers, characterised by the fact of providing:
• an anemometer having a propeller (1);
• means (11,12) for driving the airflow generated by the skier's movement towards said propeller (1) of said anemometer;
• means (3,5) for detecting the rotational speed of said propeller and generating signals as a function of said rotational speed;
• means (7) for processing said signals and displaying (8) the instantaneous speed, as well as other data.

2. Anemometer-driven tachometer for skiers according with claim 1, characterised by the fact that said means for driving the airflow generated by the skier's movement towards said propeller of said anemometer comprise entry and exit orifices (11,12) provided on the front and rear side of said container (9) respectively, the axis of said orifices interfering with the route of the cups of said anemometer, so that the propeller (1) only rotates when the airflow is parallel or almost parallel to the axial direction of said orifices (11,12).

3. Anemometer-driven tachometer as per claim 2, characterised by the fact that the propeller shaft axis corresponds to the container axis, so that the propeller rotation movement will be parallel to the airflow.

4. Anemometer-driven tachometer as per claim 2, characterised by the fact that the propeller shaft axis is parallel to the airflow, so that the propeller rotation movement will be perpendicular to the airflow.

5. Anemometer-driven tachometer for skiers according with claim 2, characterised by the fact of providing a container (9) with coupling means (10) for fastening said anemometer to the skier's leg (15) or to a to a ski-boot, so as to arrange said orifices (11,12) with their axis parallel or almost parallel to one of the skis.

6. Anemometer-driven tachometer for skiers according with any of the preceding claims, characterised by the fact of providing an elastic or rigid belt (10) fitted with a buckle (13) or Velcro fastening which allows the instrument to be fixed to the skier and rapidly released.

7. Anemometer-driven tachometer as per any of the preceding claims, characterised by the fact that it presents a number of magnets on the propeller or on an appendix of the propeller.

8. Anemometer-driven tachometer as per any of the preceding claims, characterised by the fact that it presents a small balancing weight (4) on the propeller in a position diametrically opposite to the magnet.

9. Anemometer-driven tachometer as per any of the preceding claims, characterised by the fact that the computer (7) is connected to the container (9) by a wire (6), so that the computer can have a different location to the container.

10. Anemometer-driven tachometer for skiers according with claim 1, characterised by the fact of providing at least a permanent magnet (3) fixed to a propeller (1) rotating around a shaft (2), the said propeller being enclosed in a container (9) with air entry and exit orifices (11,12), and a magnetic detector (5) connected (i) to a computer (7) designed to analyse the output signal from the magnetic detector, which supplies signals corresponding to the skier's conditions of travel, including the travel signal, and (ii) to an analog or digital display (8) designed to indicate the output signal of the computer.
